# EUROPEAN PATENT APPLICATION

(11) **EP 4 769 132 A1**
(43) Date of publication of application: **01.07.2026**
(21) Application number: 24855693.8
(22) Date of filing: 15.08.2024
(51) Int. Cl.: G06F 9/451, G06F 3/0482, G06F 3/0483

(54) **METHOD AND APPARATUS FOR INFORMATION PROCESSING, DEVICE, AND STORAGE MEDIUM**

(30) Priority: 21.08.2023 CN 202311058938
(71) Applicant: Beijing Zitiao Network Technology Co., Ltd., Beijing 100190 (CN)
(72) Inventor: ZHAO, Tianshuang, Beijing 100028 (CN); TANG, Yuxi, Beijing 100028 (CN)
(74) Representative: Grünecker Patent- und Rechtsanwälte PartG mbB
(86) International application number: PCT/CN2024/112251
(87) International publication number: WO 2025/039967

(57) **Abstract**

A method, apparatus, device and storage medium for information processing. The method includes: presenting a work presentation user interface supporting a sidebar unfolding operation (210); and presenting, in response to detecting a trigger for the sidebar unfolding operation, a sidebar in the work presentation user interface, the sidebar comprising at least an area associated with a favorites list of a user, the area comprising at least card information corresponding to at least one work in the favorites list and an access entry control for viewing the favorites list (220). In this way, the content presented in the sidebar is enriched, enabling users to quickly access the favorites list, thereby enhancing the user experience. In this way, the content presented in the sidebar is enriched, enabling users to quickly access the favorites list, thereby enhancing the user experience.

## Description

This application claims the benefit of Chinese Patent Application No. 202311058938.4, filed on August 21, 2023, entitled "METHOD, APPARATUS, DEVICE AND STORAGE MEDIUM FOR INFORMATION PROCESSING," the entire content of which is incorporated herein by reference.

### FIELD

Example embodiments of the present disclosure generally relate to the field of computers, and in particular, to a method, apparatus, device and computer-readable storage medium for information processing.

### BACKGROUND

With the rapid development of Internet technology, a variety of applications have become important tools in people's daily lives. Different applications often have different functions, and users can achieve specific services through applications with particular functions. For example, users can post, browse, and view various types of content within applications, including multimedia content such as videos, images, image collections, and audio. Furthermore, to facilitate users' ability to access media works again, many applications provide a "favorites" feature, allowing users to store certain works in a favorites list.

A sidebar, as a user interface displayed on the side edge of the screen, usually includes some commonly used applets and/or tools for users to select, enabling users to quickly access the corresponding applets/tools. However, the content displayed on existing sidebars is monotonous and not rich enough, and at least it cannot meet users' expectation of quickly accessing the favorites list.

### SUMMARY

In a first aspect of the present disclosure, a method for information processing is provided. The method includes: presenting a work presentation user interface supporting a sidebar unfolding operation; and presenting, in response to detecting a trigger for the sidebar unfolding operation, a sidebar in the work presentation user interface, the sidebar comprising at least an area associated with a favorites list of a user, the area comprising at least card information corresponding to at least one work in the favorites list and an access entry control for viewing the favorites list.

In a second aspect of the present disclosure, an apparatus for information processing is provided. The apparatus comprises a content presenting module configured to present a work presentation user interface supporting a sidebar unfolding operation; and a sidebar presenting module configured to present, in response to detecting a trigger for the sidebar unfolding operation, a sidebar in the work presentation user interface, the sidebar comprising at least an area associated with a favorites list of a user, the area comprising at least card information corresponding to at least one work in the favorites list and an access entry control for viewing the favorites list.

In a third aspect of the present disclosure, an electronic device is provided. The device includes at least one processing unit; and at least one memory coupled to the at least one processing unit and storing instructions for execution by the at least one processing unit, the instructions, when executed by the at least one processing unit, causing the device to perform the method of the first aspect.

In a fourth aspect of the present disclosure, a computer-readable storage medium is provided. The medium has a computer program stored thereon, the computer computer program, when executed by a processor, implementing the method of the first aspect.

It should be understood that the content described in this section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the present disclosure can be implemented;
FIG. 2 illustrates a flowchart of a process for information processing according to some embodiments of the present disclosure;
FIG. 3A to FIG. 3B respectively illustrate schematic diagrams of an example of an information presentation page according to some embodiments of the present disclosure;
FIG. 4A to FIG. 4C respectively illustrate schematic diagrams of an example of an information presentation page according to some embodiments of the present disclosure;
FIG. 5 illustrates a block diagram of an apparatus for information processing according to some embodiments of the present disclosure; and
FIG. 6 illustrates an electronic device in which one or more embodiments of the present disclosure may be implemented.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms and should not be construed as limited to the embodiments set forth herein. Rather, these embodiments are provided for a more thorough and complete understanding of the present disclosure. It should be understood that the drawings and embodiments of the present disclosure are for example purposes only and are not intended to limit the scope of the present disclosure.

In the description of the embodiments of the present disclosure, the terms "including", and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

It may be understood that the data involved in the technical solution (including but not limited to the data itself, the obtaining or use of the data) should follow the requirements of the corresponding laws and regulations and related regulations.

It may be understood that, before the technical solutions disclosed in the embodiments of the present disclosure are used, the types of user information related to the present disclosure, the usage scope, the usage scenario and the like should be notified to the user in an appropriate manner according to the relevant laws and regulations, and the creation of the user is obtained.

For example, in response to receiving an active request from a user, prompt information is sent to the user to explicitly prompt the user that the requested operation will need to obtain and use user information of the user, so that the user may autonomously select whether to provide user information to software or hardware executing the operation of the technical solution of the present disclosure according to the prompt information.

As an optional but non-limiting implementation, in response to receiving an active request of the user, a manner of sending prompt information to the user may be, for example, a pop-up window, and prompt information may be presented in a text manner in the pop-up window. In addition, the pop-up window may further carry a selection control for the user to select "agree" or "disagree" to provide user information to the electronic device.

It may be understood that the foregoing notification and obtaining a user creation process are merely illustrative, and do not constitute a limitation on implementations of the present disclosure, and other manners of meeting related laws and regulations may also be applied to implementations of the present disclosure.

As briefly mentioned above, an increasing number of applications are being designed to provide users with a variety of services. For example, users can post, browse, and view various types of content within applications, including multimedia content such as videos, images, image collections, and audio. Furthermore, to facilitate users' ability to access media content again, many applications offer a favorites list function, enabling users to store certain content in the favorites list. In addition, a sidebar, as a user interface displayed on the side edge of the screen, typically includes some commonly used applets and/or tools for users to select, allowing users to quickly access the corresponding applets/tools. However, the content displayed on existing sidebars is monotonous and not rich enough, and at least it cannot meet users' expectation of quickly accessing the favorites list.

Therefore, embodiments of the present disclosure provide a solution for information processing. The scheme includes: presenting a work presentation user interface supporting a sidebar unfolding operation; and presenting, in response to detecting a trigger for the sidebar unfolding operation, a sidebar in the work presentation user interface, the sidebar comprising at least an area associated with a favorites list of a user, the area comprising at least card information corresponding to at least one work in the favorites list and an access entry control for viewing the favorites list. In this way, the content displayed by the sidebar is enriched, so that the user can quickly know and access the favorites list, thereby improving the user experience.

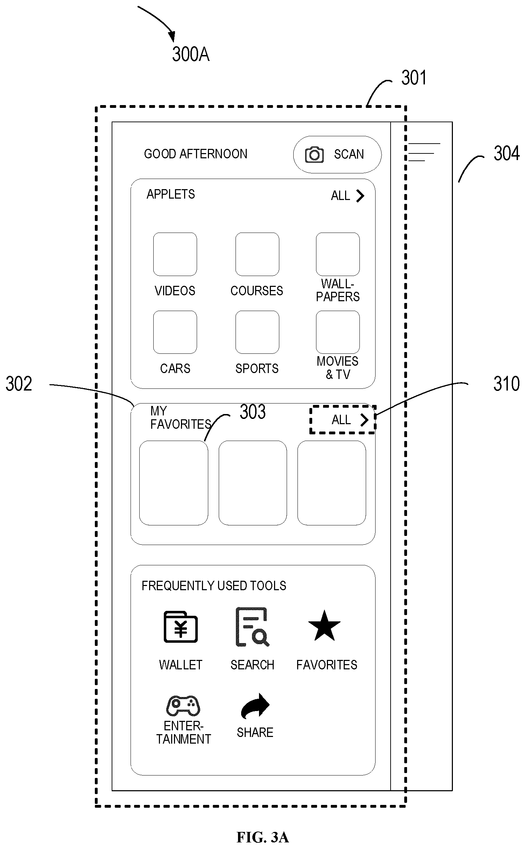

For a better understanding of various embodiments of the present disclosure, the user interfaces illustrated in FIGS. 3A to 4C are referenced in the example embodiments below. It should be understood that the user interfaces shown in FIGS. 3A to 4C are merely examples, and various designs may actually exist. For example, respective graphical elements and/or control in the user interface may have different arrangements and different visual representations, one or more of the elements and/or control may be omitted or replaced, and one or more other elements and/or control may also be present. In addition, any suitable content may be included in the user interface. The scope of the present disclosure is not limited in this respect.

Further, the user may implement switching and jumping of the user interface by activating a control/entry in each user interface. It should be understood that the logic for switching and jumping may be arbitrarily set. For example, in an example embodiment, the user jumps from a first user interface to a second user interface by activating the control. In other embodiments, the user may jump from the first user interface to a third user interface by activating a further control. The present disclosure is not limited in this respect. It should also be understood that although a plurality of user interfaces are described in one particular embodiment, any user interface described in this disclosure may be independently implemented and protected as a separate embodiment.

Further, the term "work" of the present disclosure refers to any type of media work, including but not limited to an audio file, a video file, an image file, a text file, and the like. Specifically, the work may be, for example, a short video, a music, an image, an image collection, a multimedia segment, an audio data, a fiction, and the like. The present disclosure is not limited in this respect.

### Example Environment

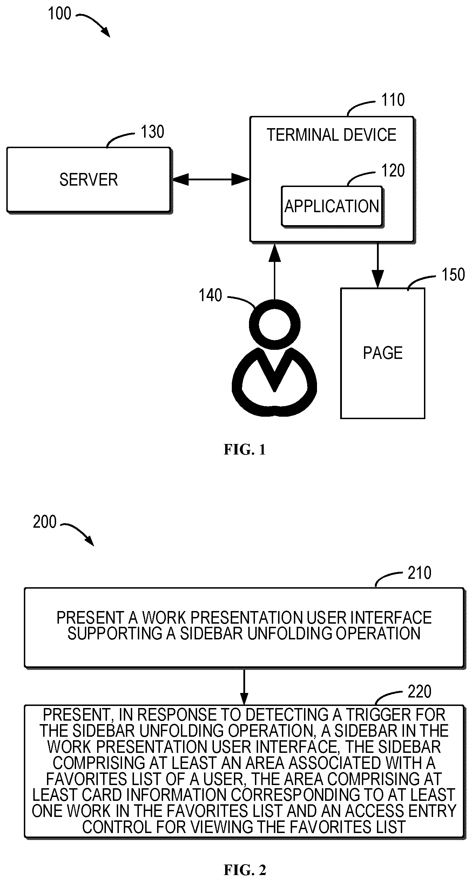

FIG. 1 illustrates a schematic diagram of an example environment 100 in which embodiments of the present disclosure can be implemented. In this example environment 100, an application 120 is installed in a terminal device 110. A user 140 may interact with the application 120 via the terminal device 110 and/or an attachment device of the terminal device 110. The application 120 may be a content sharing application capable of providing various services related to the media content/work to the user 140, including browsing, commenting, forwarding, creating (e.g., shooting and/or editing), posting, and the like. As used herein, "media content/work" includes one or more types of content, such as video, images, animated figures, image collection, audio, text, and the like.

In the environment 100 of FIG. 1, the terminal device 110 may present a page 150 of application 120 if the application 120 is active. The page 150 may include various page that the application 120 can provide, such as an information presentation page, a content creating page, a content posting page, a message page, a personal page, and the like. The application 120 may provide a content browsing function to browse various types of content posted in the application 120. The application 120 may also provide a content creating function, including shooting, uploading, editing, and/or posting media content. The application 120 may also provide an interactive function, including interacting with other users (for example, adding friends) and interacting with various types of content (including giving likes, favorites, comments, etc.).

In some embodiments, the terminal device 110 communicates with the server 130 to enable provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 may also support any type of interface of a user (such as a "wearable" circuit, etc. ). The server 130 may be various types of computing systems/servers capable of providing computing power, including, but not limited to, mainframes, edge computing nodes, computing devices in a cloud environment, and the like.

It should be understood that the structures and functions of the various elements in the environment 100 are described for example purposes only and do not imply any limitation to the scope of the present disclosure.

### Example Process

FIG. 2 illustrates a flowchart of a process 200 for information processing according to some embodiments of the present disclosure. The process 200 may be implemented at the terminal device 110. The process 200 is described below with reference to FIG. 1.

At block 210, the terminal device 110 presents a work presentation user interface supporting a sidebar unfolding operation.

At block 220, the terminal device 110 presents, in response to detecting a trigger for the sidebar unfolding operation, a sidebar in the work presentation user interface, the sidebar comprising at least an area associated with a favorites list of a user, the area comprising at least card information corresponding to at least one work in the favorites list and an access entry control for viewing the favorites list.

It would be appreciated that the sidebar can be unfolded in a variety of ways. In some example embodiments, the sidebar unfolding control is presented in a displayed manner in a work presentation user interface, for example, an icon " 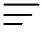 " or other style of icon or text is displayed in the upper left corner/upper right corner of the user interface. Users can trigger the operation of unfolding the sidebar by clicking on this icon.

In some example embodiments, the user may trigger unfolding of the sidebar through a predefined gesture. For example, when the user slides their finger from the left edge of the user interface to the right, the left sidebar is presented on the left side of the user interface. Correspondingly, when the user slides their finger from the right edge of the user interface to the left, the right sidebar is presented on the right side of the user interface.

It should be understood that there are many ways to trigger the unfolding of the sidebar, and the example embodiments described above should not be construed as limiting the scope of the present disclosure.

The embodiments described above are better understood with reference to the example user interface shown in FIG. 3A. In FIG. 3A, the terminal device 110 presents a sidebar 301 in a work presentation user interface 304. In particular, the sidebar 301 includes an area 302 associated with the user's favorites list, i.e., an area associated with "My Favorites". In the area 302, card information (such as card information 303) corresponding to three works in the favorites list and an access entry control 310 for viewing the favorites list are included.

It should be understood that the icon for the access entry control 310 may be represented in various forms, such as text (e.g., "All," "More," etc.), symbols (e.g., "...," ">," etc.). The present disclosure is not limited in this regard.

In the example embodiment of FIG. 3A, the "area 302 associated with the user's favorites list" is set in the central area of the sidebar, and more specifically, below the applet and above the frequently used tools. In this way, the user can more quickly trigger the viewing of the favorites list or the favorited works.

By setting the area related to the favorites list of the user in the sidebar, the user can quickly access the favorites list, and the user experience is improved.

In some embodiments, the card information corresponding to each work includes at least a thumbnail of the work. Further, when the work is a media file (such as short video, music, book, image collection), the card information may be cover information of the media file. In this way, the user can more intuitively understand the information of the work in the favorites list.

In some embodiments, the terminal device 110 jumps from the work presentation user interface to a first details page corresponding to a first work in response to a trigger on the card information corresponding to the first work in the at least one work. With continued reference to FIG. 3A, when the user clicks on the card information 303, the user interface presents the work corresponding to the card information 303. Additionally, in some embodiments, the first details page may be a playback page of the favorites video list. In some other embodiments, the first details page may be a media recommendation page. Further, when the user slides up and down on the first details page, the presentation of a further work may be triggered.

In this way, the user can not only obtain the work information in the favorites list through the sidebar, but also achieve direct access to the works.

In some embodiments, the terminal device 110 jumps, in response to a trigger on the access entry control, from the work presentation user interface to a second details page corresponding to the favorites list. Continuing to refer to FIG. 3A. When the user triggers the access entry control 310, the user interface jumps to the second details page.

In some embodiments, the second details page may at least present content related to the favorites list. The second details page includes, but is not limited to, a personal page, a favorites list page, and the like. The present disclosure is not limited in this respect.

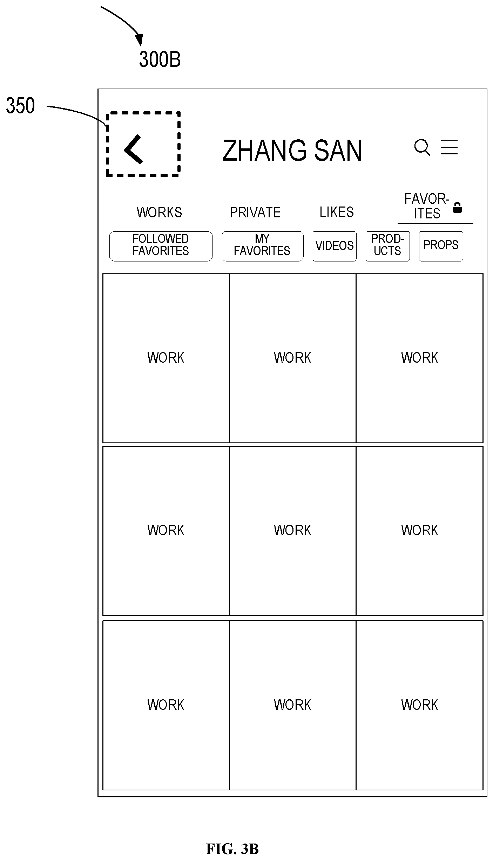

Further, in order to present more favorited works to the user, the interface layout of the second details page may be further optimized, for example, an interface element with low display correlation with the favorites list is omitted or hidden. Referring to FIG. 3B, an example of a second details page is shown. In FIG. 3B, the second details page is a personal page. In the personal page, a column label area configured at the bottom of the user interface for switching among a plurality of target columns is omitted. In this way, more favorited works can be displayed to the user, better meeting the user's needs for viewing the favorites list.

In some embodiments, to enhance the flexibility of page jumping, the second details page further includes a return control. In this case, the terminal device 110 may jump from the second details page to the work presentation user interface in response to a trigger on the return control.

Continuing to refer to FIG. 3B. In FIG. 3B, a return control 350 ">;" is included. It should be understood that the icon of the return control 350 can take various forms, such as text (e.g., "Return", "Switch", etc.) or symbols (e.g., "<<", "<", etc.). The present disclosure is not limited in this respect.

In this way, after the user views the favorites list, the user can quickly jump back to the previous user interface, thereby optimizing the jump logic between user interfaces.

In some embodiments, at least one of the works shown in the sidebar may be dynamically updated. In some embodiments, the terminal device 110 selects the at least one work from the favorites list based on one or more factors to present in an area associated with the favorites list of the sidebar.

In some embodiments, the factors for selecting the at least one work may be a chronological order in which the works in the favorites list are favorited in the favorites list. works newly added to the favorites list would be presented in the sidebar. Alternatively, or in addition, the factor for selecting at least one work may be the popularity of the work. Alternatively, or in addition, the factor for selecting at least one work may be the user's viewing status of the work.

It should be understood that the above example factors are merely example. In other embodiments, at least one work may be selected according to any other suitable factor. More importantly, these factors can be used either alone or in combination. The present disclosure is not limited in this respect.

In this way, the favorited work presented in the sidebar is the work that potential users are most likely to want to view. In this case, users can directly trigger the viewing of the work by clicking on the corresponding card information of the work, thereby enhancing the user experience.

According to some embodiments of the present disclosure, after the user triggers a favorite operation, prompt information may be sent to the user to prompt the user to view the work again. Specifically, in some embodiments, the work presentation user interface includes a target work. Next, in response to detecting a favorite operation on the target work, the terminal device 110 presents favorites access prompt information at a presentation location of the side bar unfolding control to prompt an access entry of the target work.

Alternatively, or in addition, in some embodiments, in response to detecting a favorite operation on the target work, the terminal device 110 presents favorites access prompt information at a presentation location of an access entry control of a second details page corresponding to the favorites list to prompt an access entry of the target work.

In some embodiments, the favorites access prompt information includes at least a thumbnail of the target work. In some embodiments, when the work is a media file (such as a short video, music, book, or image collection), the thumbnail may be the cover information of the media file. Alternatively, the thumbnail may also be a media screenshot at the time of collection. The present disclosure is not limited in this respect.

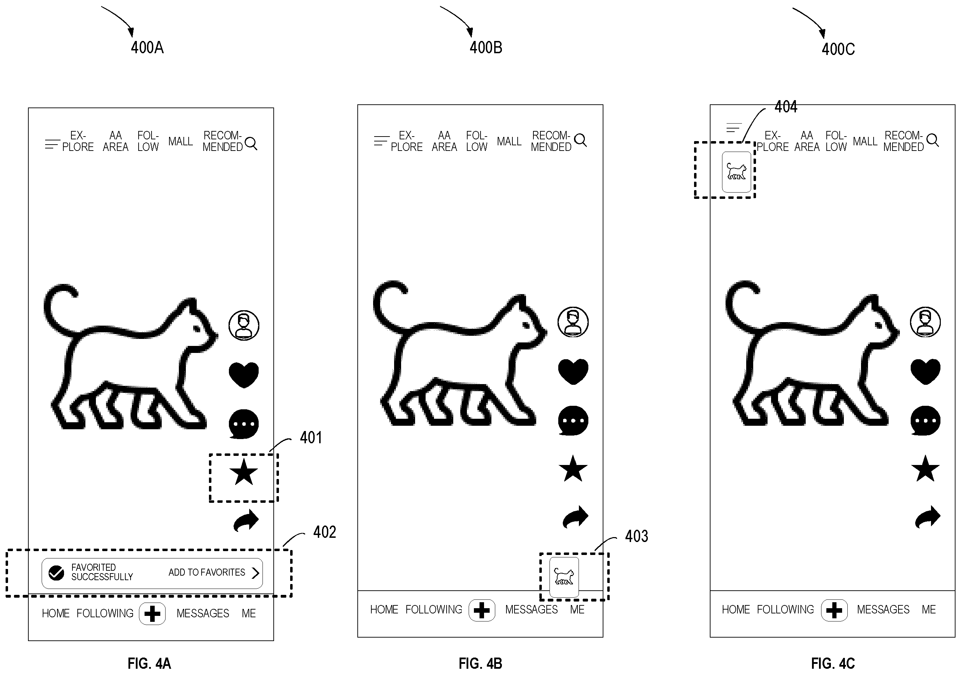

Referring to FIGS. 4A-4C to better understand how to present the favorites access prompt information to the user. In FIG. 4A, after the user triggers an operation of collecting the target work (for example, clicking on a favorite control with a star shape), the favorite control is filled with a bright yellow color. Optionally, in response to the target work being successfully favorited, confirmation information for the favorite operation of the target work -"Favorited successfully"-is presented within a predetermined area, and, in association therewith, guidance information -"Add to a favorites list"- is presented to guide the user to classify the target work into a predetermined favorites list.

In the example embodiment of FIG. 4B, the terminal device 110 presents favorites access prompt information 403 at the presentation location of the access entry control of the second details page corresponding to the favorites list to prompt the access entry of the target work. In this example embodiment, the column label "I" may trigger a switch to a personal page. Thus, presenting the favorites access prompt information 403 at the column label "I" may prompt the user that the favorited work can be accessed by triggering the target column label "I".

In the example embodiment of FIG. 4C, the terminal device 110 presents favorites access prompt information 404 at the presentation location of the sidebar unfolding control to prompt the access entry of the target work. In this example embodiment, the sidebar unfolding control may trigger display of the sidebar. As disclosed herein, the sidebar may include at least an area related to the user's favorites list. Therefore, the favorites access prompt information 404 is presented at the presentation location of the sidebar unfolding control, and the user may be prompted that the favorited work can be accessed by triggering the sidebar unfolding control.

In some embodiments, an animation effect may be added to the favorites access prompt information to enhance its visual display effect.

In an example embodiment, in response to the work being successfully favorited, the favorites access prompt information is popped up at the presentation location of the sidebar unfolding control and/or the presentation location of the access entry control of the second details page corresponding to the favorites list.

Alternatively, or in addition, as another example embodiment, in response to the work being successfully favorited, a thumbnail of the work is displayed in the central area of the user interface. Subsequently, the thumbnail moves from the central area to the presentation location of the sidebar unfolding control and/or the presentation location of the access entry control of the second details page corresponding to the favorites list along a predetermined trajectory.

Alternatively, or in addition, in still a further example embodiment, when the favorites access prompt information is presented at the presentation location of the sidebar unfolding control and/or the presentation location of the access entry control of the second details page corresponding to the favorites list, the favorites access prompt information may be presented with a dynamic effect such as scaling or flashing.

It should be understood that the above examples of presenting favorites access prompt information are merely example, and should not be construed as limiting the present disclosure. In other embodiments, the favorites access prompt information may be presented at the presentation location of the sidebar unfolding control and/or the presentation location of the access entry control of the second details page corresponding to the favorites list in other manners. The present disclosure is not limited in this respect.

Additionally, in order to reduce disturbance to the user, the favorites access prompt information may automatically disappear after being displayed for a predetermined period of time. In this way, the user is prompted with the entry for accessing the favorited work again, while avoiding the favorites access prompt information from obscuring other interface elements.

According to some embodiments of the present disclosure, the favorites access prompt information may be displayed based on one or more predetermined conditions. In an example embodiment, if the favorite operation is not revoked within a first predetermined time period after the favorite operation occurs , the favorites access prompt information is presented. Correspondingly, if an operation to cancel the favorites is detected within a first predetermined time period after the favorite operation occurs, the favorites access prompt information is not presented.

In a further example embodiment, if page switching fails to occur within a second predetermined time period after the favorite operation occurs, the favorites access prompt information is presented. Correspondingly, if a page switch is detected within a second predetermined time period after the favorite operation occurs, the favorites access prompt information is not presented.

In a further example embodiment, the favorites access prompt information is presented if the number that the favorites access prompt information is presented within a predetermined time period fails to reach a threshold number. Correspondingly, if the number of presentations of the favorites access prompt information within a predetermined time period reaches a threshold number, the favorites access prompt information is not presented. For example, when the predetermined time period is one day and the threshold number is three, after the favorites access prompt information has been presented three times, the presentation of the favorites access prompt information is no longer triggered. In this way, the presentation number of the favorites access prompt information can be controlled within a reasonable range.

### Example Apparatus and Device

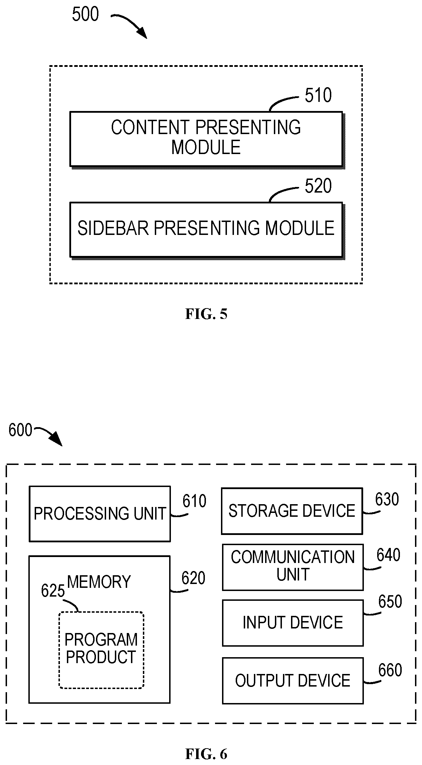

FIG. 5 is a schematic structural block diagram of an apparatus for information processing 500 according to some embodiments of the present disclosure. The apparatus 500 may be implemented or included in the terminal device 110. The various modules/components in the apparatus 500 may be implemented by hardware, software, firmware, or any combination thereof.

As shown, the apparatus 500 includes a content presenting module 510 configured to present a work presentation user interface supporting a sidebar unfolding operation; and a sidebar presenting module 520 configured to present, in response to detecting a trigger for the sidebar unfolding operation, a sidebar in the work presentation user interface, the sidebar comprising at least an area associated with a favorites list of a user, the area comprising at least card information corresponding to at least one work in the favorites list and an access entry control for viewing the favorites list.

In some embodiments, the card information corresponding to each work comprises at least a thumbnail of the work.

In some embodiments, the apparatus 500 further includes a first detail presenting module configured to: jump from the work presentation user interface to a first details page corresponding to a first work in response to a trigger on the card information corresponding to the first work in the at least one work.

In some embodiments, the apparatus 500 further includes a second detail presenting module configured to: jump, in response to a trigger on the access entry control, from the work presentation user interface to a second details page corresponding to the favorites list.

In some embodiments, the second details page comprises a personal page of the user.

In some embodiments, the second details page includes a return control, and the apparatus 500 further includes a returning module configured to jump from the second details page to the work presentation user interface in response to a trigger on the return control.

In some embodiments, the apparatus 500 further includes a work selecting module configured to select the at least one work from the favorites list based on a chronological order in which the works in the favorites list are favorited in the favorites list.

In some embodiments, wherein the work presentation user interface comprises a target work, the apparatus 500 further includes a prompting module configured to present, in response to detecting a favorite operation on the target work, favorites access prompt information at least one of the following locations to prompt an access entry for the target work: a presentation location of the sidebar unfolding control, or a presentation location of an access entry control of a second details page corresponding to the favorites list.

In some embodiments, the favorites access prompt information comprises at least a thumbnail of the target work.

In some embodiments, the prompting module is further configured to: present the favorites access prompt information based on at least one of the following conditions being satisfied: the favorite operation is not revoked within a first predetermined time period after the favorite operation occurs; page switching fails to occur within a second predetermined time period after the favorite operation occurs; or the number that the favorites access prompt information is presented within a predetermined time period fails to reach a threshold number.

FIG. 6 illustrates a block diagram of an electronic device 600 in which one or more embodiments of the present disclosure may be implemented. It should be understood that the electronic device 600 illustrated in FIG. 6 is merely for example and should not constitute any limitation on the function and scope of the embodiments described herein. The electronic device 600 shown in FIG. 6 may be configured to implement the terminal device 110 in FIG. 1.

As shown in FIG. 6, the electronic device 600 is in a form of a general-purpose computing device. Components of the electronic device 600 may include, but are not limited to, one or more processors or processing units 610, memory 620, storage device 630, one or more communication units 640, one or more input devices 650, and one or more output devices 660. The processing units 610 may be actual or virtual processors and are capable of performing various processes based on programs stored in the memory 620. In a multiprocessor system, a plurality of processing units perform computer-executable instructions in parallel to increase the parallel processing power of the electronic device 600.

The electronic device 600 typically includes a plurality of computer storage media. Such media may be any obtainable media accessible to the electronic device 600, including, but not limited to, volatile and non-volatile media, removable and non-removable media. The memory 620 may be volatile memory (e.g., registers, cache, random access memory (RAM)), non-volatile memory (e.g., read-only memory (ROM), electrically erasable programmable read-only memory (EEPROM), flash memory), or some combination thereof. The storage device 630 may be a removable or non-removable medium and may include a machine-readable medium, such as a flash drive, a disk, or any other medium that may be capable of being used to store information and/or data (e.g., training data for training) and may be accessible within the electronic device 600.

The electronic device 600 may further include additional removable/non-removable, volatile/non-volatile storage media. Although not shown in FIG. 6, a disk drive for reading from or writing to a removable, non-volatile disk (e.g., a "floppy disk") and an optical disk drive for reading from or writing to a removable, non-volatile optical disk may be provided. In these embodiments, each drive may be connected to a bus (not shown) by one or more data media interfaces. The memory 620 may include a computer program product 625 having one or more program modules that are configured to perform various methods or actions of various embodiments of the present disclosure.

The communication unit 640 implements communication with other electronic devices via a communication medium. Additionally, the functions of the components of the electronic device 600 may be implemented as a single computing cluster or a plurality of computing machines that are capable of communicating over a communication connection. Thus, the electronic device 600 may use logical connections to one or more other servers, networked personal computers (PCs), or a further network node to operate in a networked environment.

The input device 650 may be one or more input devices, such as a mouse, a keyboard, a tracking ball, and the like. The output device 660 may be one or more output devices, such as a monitor, a speaker, a printer, and the like. The electronic device 600 may also communicate, as desired, via the communication unit 640, with one or more external devices (not shown), external devices such as storage devices, display devices, etc., with one or more devices that enable a user to interact with the electronic device 600, or with any device that enables the electronic device 600 to communicate with one or more other electronic devices (e.g., a network card, modem, etc.) to communicate. Such communication may be performed via an input/output (I/O) interface (not shown).

According to example embodiments of the present disclosure, a computer-readable storage medium having a computer program stored thereon is provided, the program, when performed by a processor, implementing the method described above. According to example embodiments of the present disclosure, a computer program product is also provided, the computer program product being tangibly stored on a non-transitory computer-readable medium and including computer-executable instructions, and the computer-executable instructions being performed by a processor to implement the methods described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram (s).

**The** computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

**The** flowchart and block diagrams in the figures show architecture, function, and operation of possible implementations of systems, methods, and computer program products according to various implementations of the present disclosure. In this regard, each block in the flowchart or block diagram may represent a module, program segment, or part of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the function involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are example, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various embodiments disclosed herein.

## Claims

1. A method for information processing, comprising:
presenting a work presentation user interface supporting a sidebar unfolding operation; and
presenting, in response to detecting a trigger for the sidebar unfolding operation, a sidebar in the work presentation user interface, the sidebar comprising at least an area associated with a favorites list of a user, the area comprising at least card information corresponding to at least one work in the favorites list and an access entry control for viewing the favorites list.

2. The method of claim 1, wherein the card information corresponding to each work comprises at least a thumbnail of the work.

3. The method of claim 1, further comprising:
jumping from the work presentation user interface to a first details page corresponding to a first work in response to a trigger on the card information corresponding to the first work in the at least one work.

4. The method of claim 1, further comprising:
jumping, in response to a trigger on the access entry control, from the work presentation user interface to a second details page corresponding to the favorites list.

5. The method of claim 4, wherein the second details page comprises a personal page of the user.

6. The method of claim 4, wherein the second details page comprises a return control, and the method further comprises:
jumping from the second details page to the work presentation user interface in response to a trigger on the return control.

7. The method of claim 1, further comprising:
selecting the at least one work from the favorites list based on a chronological order in which the works in the favorites list are favorited in the favorites list.

8. The method of claim 1, wherein the work presentation user interface comprises a target work, and the method further comprises:
presenting, in response to detecting a favorite operation on the target work, favorites access prompt information at at least one of the following locations to prompt an access entry for the target work:
a presentation location of the sidebar unfolding control, or
a presentation location of an access entry control of a second details page corresponding to the favorites list.

9. The method of claim 8, wherein the favorites access prompt information comprises at least a thumbnail of the target work.

10. The method of claim 8, wherein presenting the favorites access prompt information comprises:
presenting the favorites access prompt information based on at least one of the following conditions being satisfied:
the favorite operation is not revoked within a first predetermined time period after the favorite operation occurs;
page switching fails to occur within a second predetermined time period after the favorite operation occurs; or
the number that the favorites access prompt information is presented within a predetermined time period fails to reach a threshold number.

11. An apparatus for information processing, comprising:
a content presenting module configured to present a work presentation user interface supporting a sidebar unfolding operation; and
a sidebar presenting module configured to present, in response to detecting a trigger for the sidebar unfolding operation, a sidebar in the work presentation user interface, the sidebar comprising at least an area associated with a favorites list of a user, the area comprising at least card information corresponding to at least one work in the favorites list and an access entry control for viewing the favorites list.

12. An electronic device, comprising:
at least one processing unit; and
at least one memory coupled to the at least one processing unit and storing instructions for execution by the at least one processing unit, the instructions, when executed by the at least one processing unit, causing the device to perform the method of any of claims 1 to 10.

13. A computer-readable storage medium having a computer program stored thereon, the computer computer program, when executed by a processor, implementing the method of any of claims 1 to 10.
